# EUROPÄISCHE PATENTSCHRIFT

(11) **EP 2 915 234 B1**
(45) Veröffentlichungstag und Bekanntmachung des Hinweises auf die Patenterteilung: **14.12.2016**
(21) Anmeldenummer: 13780315.1
(22) Anmeldetag: 18.10.2013
(51) Int. Cl.: H02J 7/00, G06F 1/16, H01M 10/44, H02J 7/02

(54) **VERFAHREN ZUM BETREIBEN EINES ELEKTRONISCHEN GERÄTS SOWIE KRAFTWAGEN**
METHOD FOR OPERATING AN ELECTRONIC APPLIANCE AND MOTOR VEHICLE
PROCÉDÉ PERMETTANT DE FAIRE FONCTIONNER UN APPAREIL ÉLECTRONIQUE ET VÉHICULE AUTOMOBILE

(30) Priorität: 02.11.2012 DE 102012021638
(43) Veröffentlichungstag der Anmeldung: 09.09.2015
(73) Patentinhaber: Audi AG, 85045 Ingolstadt (DE)
(72) Erfinder: LOTTES, Daniel, 93309 Kelheim (DE)
(74) Vertreter: Bauer, Dominik Michael
(86) Internationale Anmeldenummer: PCT/EP2013/003139
(87) Internationale Veröffentlichungsnummer: WO 2014/067627

(56) Entgegenhaltungen:
- EP-A1- 2 086 085
- WO-A1-2007/035103
- US-A1- 2011 050 164
- US-A1- 2011 175 576
- US-A1- 2012 115 549
- US-A1- 2012 235 636

## Beschreibung

Die Erfindung betrifft ein Verfahren zum Betreiben eines elektronischen Geräts, sowie einen Kraftwagen.

Elektronische Geräte, wie beispielsweise sogenannte Laptops, PDAs (persönlicher digitaler Assistent), Mobilfunkgeräte, insbesondere Handys, Smartphones, oder Tablet-PCs, sind aus dem allgemeinen Stand der Technik hinlänglich bekannt. Ein solches, insbesondere tragbares elektronisches Gerät weist eine Batterie sowie eine Ladeeinrichtung zum Aufladen der Batterie mit elektrischem Strom auf. Mittels der Batterie kann wenigstens eine Komponente des elektronischen Geräts mit elektrischem Strom versorgt werden, ohne, dass die Ladeeinrichtung über ein Kabel mit einem vom elektronischen Gerät externen Stromnetz elektrisch verbunden ist.

Bei der mit elektrischem Strom zu versorgenden Komponente handelt es sich beispielsweise um eine Recheneinrichtung zum Ausführen eines Computerprogramms, welches üblicherweise auch als Applikation oder App bezeichnet wird. Ein Mobilfunkgerät ist darüber hinaus mit wenigstens einem Funknetz über Funktechnik verbindbar

Ist das elektronische Gerät über seine Ladeeinrichtung nicht mit einer vom elektronischen Gerät externen Ladevorrichtung, einem sogenannten Ladegerät, zum Aufladen der Batterie gekoppelt und wird beispielsweise die Recheneinrichtung von der Batterie mit elektrischem Strom versorgt, so entlädt sich die Batterie sukzessive. Um die Batterie anschließend wieder aufzuladen, wird die Ladeeinrichtung des elektronischen Geräts mit der Ladevorrichtung gekoppelt, welche wiederum mit einer vom elektronischen Gerät externen Stromquelle beispielsweise in Form des Stromnetzes gekoppelt oder koppelbar ist. Dadurch kann die Batterie mit Strom von der elektrischen Stromquelle versorgt und dadurch aufgeladen werden.

Moderne Mobilfunkgeräte weisen Funktionalitäten auf, welche über das bloße Telefonieren hinausgehen. Bei derartigen Funktionalitäten handelt es sich beispielsweise um eine von einem Übertragungsmodul bereitgestellte drahtlose Datenübertragung, beispielsweise in Form einer Datenübertragung über Infrarotstrahlen, über Bluetooth oder per Funk über WLAN (Wireless Local Area Network). Ferner kann es sich bei einer solchen drahtlosen Datenübertragung um eine Positionierfunktionalität beispielsweise via GPS (Global Positioning System) handeln, mittels welcher die Position des Mobilfunkgeräts auf der Erde drahtlos bestimmbar ist. Sind diese Funktionalitäten aktiviert, so führen sie gegenüber ihrem jeweiligen deaktivierten Zustand zu einem erhöhten Verbrauch an elektrischem Strom. Dadurch wird die Batterie schneller entladen. Daher ist die Deaktivierung dieser Funktionalitäten sinnvoll, wenn sie nicht benötigt werden.

Auch andere elektronische Geräte weisen Funktionalitäten auf, welche einem Nutzer des elektronischen Geräts in vielen Situation hilfreich sind, welche jedoch in einigen Situationen sinnvollerweise deaktiviert sein können, um in der Batterie gespeicherten Strom zu sparen. Hierbei kann es sich beispielsweise um eine drahtlose Datenübertragung eines Laptops handeln, welche nicht immer aktiviert sein muss.

Sind die Funktionalitäten deaktiviert und werden sie benötigt, so sind dann von dem Nutzer jedoch mitunter vielfältige und umständliche Eingaben an dem elektronischen Gerät in das elektronische Gerät vorzunehmen, um die Funktionalitäten wieder zu aktivieren. Dieses bedarfsgerechte Aktivieren und Deaktivieren der Funktionalitäten führt somit zu einer in Summe zeitaufwändigen Interaktion des Nutzers mit dem elektronischen Gerät.

Es ist daher Aufgabe der vorliegenden Erfindung, ein Verfahren zum Betreiben eines elektronischen Geräts, eine Ladevorrichtung zum Aufladen einer Batterie eines elektronischen Geräts sowie einen Kraftwagen bereitzustellen, mittels welchen die geschilderte und zeitaufwändige Bedienung des elektronischen Geräts vermeidbar ist.

Diese Aufgabe wird durch ein Verfahren mit den Merkmalen des Patentanspruchs 1, sowie durch einen Kraftwagen mit den Merkmalen des Patentanspruchs 7 gelöst. Vorteilhafte Ausgestaltungen mit zweckmäßigen und nichttrivialen Weiterbildungen der Erfindung sind in den übrigen Ansprüchen angegeben.

Ein erster Aspekt der Erfindung betrifft ein Verfahren zum Betreiben eines elektronischen Geräts. Das elektronische Gerät umfasst eine Batterie und eine Ladeeinrichtung zum Aufladen der Batterie mit elektrischem Strom. Zum Aufladen der Batterie mit elektrischem Strom wird die Ladeeinrichtung mit einer vom elektronischen Gerät externen Ladevorrichtung elektrisch gekoppelt, wobei die Ladevorrichtung ihrerseits mit einer vom elektronischen Gerät externen Stromquelle gekoppelt oder koppelbar ist. Dadurch kann elektrischer Strom von der Stromquelle über die Ladevorrichtung und die Ladeeinrichtung in die Batterie eingespeist werden.

Im Rahmen des erfindungsgemäßen Verfahrens ist es vorgesehen, dass zumindest eine Funktionalität des elektronischen Geräts in einen zuvor von einem Nutzer des elektronischen Geräts ausgewählten Zustand eingestellt wird, wenn ein Kopplungszustand der Ladeeinrichtung mit der vom elektronischen Gerät externen Ladevorrichtung zum Aufladen der Batterie verändert wird. Mit anderen Worten kann der Nutzer zeitlich vor einer Veränderung des Kopplungszustands der Ladeeinrichtung mit der Ladevorrichtung einen Zustand der Funktionalität auswählen, in den die Funktionalität dann versetzt wird, wenn es zu einer Änderung des Kopplungszustands kommt.

Unter dieser Änderung des Kopplungszustands ist zu verstehen, dass die zunächst von der Ladevorrichtung entkoppelte Ladeeinrichtung des elektronischen Geräts mit der externen Ladevorrichtung elektrisch gekoppelt. Ferner ist darunter zu verstehen, dass die zunächst mit der Ladevorrichtung gekoppelte Ladeeinrichtung des elektronischen Geräts von der externen Ladevorrichtung elektrisch entkoppelt wird.

Ist die Ladeeinrichtung beispielsweise zunächst von der Ladevorrichtung entkoppelt und wird dann die Ladeeinrichtung mit der Ladevorrichtung elektrisch gekoppelt, so wird dann die Funktionalität in den zeitlich vor dem Koppeln vom Nutzer ausgewählten Zustand versetzt. Befindet sich die Funktionalität zeitlich vor dem Koppeln in einem anderen Zustand, so wird ihr Zustand in den zuvor ausgewählten Zustand geändert. Befindet sich die Funktionalität zeitlich vor dem Koppeln bereits in dem ausgewählten Zustand, so wird ihr Zustand beibehalten.

Das Verfahren ermöglicht somit eine bedarfsgerechte und vom Nutzer gewünschte und insbesondere einstellbare bzw. auswählbare Einstellung des Zustands der Funktionalität, wenn der Nutzer die Ladeeinrichtung mit der Ladevorrichtung koppelt oder entkoppelt. Dadurch kann vermieden werden, dass der Nutzer immer dann, wenn sich der Kopplungszustand ändert, Eingaben am elektronischen Gerät in dieses durchführen muss, um den gewünschten Zustand der Funktionalität manuell einzustellen. Im Gegensatz dazu erfolgt die Einstellung des gewünschten Zustands - zeitlich nach dem Auswählen dieses durch den Nutzer - automatisch bei der Änderung des Kopplungszustands.

Hierdurch ist es beispielsweise möglich, die Funktionalität beim Koppeln der Ladeeinrichtung mit der Ladevorrichtung zu deaktivieren, so dass die Funktionalität keinen elektrischen Strom mehr verbraucht. In der Folge kann die Batterie besonders schnell aufgeladen werden kann.

Darüber hinaus ist es im Rahmen des Verfahrens möglich, mehrere Funktionalitäten des elektronischen Geräts beim Ändern des Kopplungszustands in jeweilige, zuvor vom Nutzer ausgewählte Zustände einzustellen. Die Gesamtheit der jeweiligen Zustände der Funktionalitäten wird üblicherweise auch als Profil bezeichnet. Dies bedeutet, dass durch das Ändern des Kopplungszustands automatisch wenigstens ein vom Nutzer auswählbares und/oder konfigurierbares Profil, welches die jeweiligen Zustände der jeweils voneinander unterschiedlichen Funktionalitäten umfasst, aktiviert oder deaktiviert werden kann, wenn sich der Kopplungszustand ändert.

Hierdurch ist es beispielsweise möglich, eine erste der Funktionalitäten zu aktivieren und eine zweite der Funktionalitäten zu deaktivieren, wenn die Ladeeinrichtung mit der Ladevorrichtung gekoppelt wird. So ist es möglich, bedarfsgerecht und in Abhängigkeit von einer aktuellen Umgebung und Situation des Nutzers den erwünschten Zustand der jeweiligen Funktionalität herbeizuführen. Mit anderen Worten ermöglicht das Verfahren die Realisierung einer umgebungsabhängigen Einstellung des auswählbaren Zustands der wenigstens einen Funktionalität.

In besonders vorteilhafter Ausgestaltung der Erfindung ist es vorgesehen, dass als das elektronische Gerät ein mit wenigstens einem Funknetz über Funktechnik verbindbares und eine Recheneinrichtung zum Ausführen wenigstens eines Computerprogramms aufweisendes Mobilfunkgerät betrieben wird. Ein solches Mobilfunkgerät weist eine Vielzahl von unterschiedlichen Funktionen auf, welche dem Nutzer in vielen Situationen sehr hilfreich sind, welche aber in einigen Situation sinnvollerweise deaktiviert werden könnten oder sollten, beispielsweise um Strom zu sparen. Ferner handelt es sich bei einem Mobilfunkgerät um ein tragbares elektronisches Gerät, welches sehr häufig, wenn nicht sogar immer mit dem Nutzer mitgeführt wird. Dadurch kommt es zusammen mit dem Nutzer häufig in unterschiedliche Umgebungssituationen, welche eine häufige Änderung des jeweiligen Zustands der Funktionalitäten erfordern können. Das erfindungsgemäße Verfahren ermöglicht somit eine besonders einfache und komfortable sowie bedarfsgerechte, Bedienung und automatische Veränderung des jeweiligen Zustands.

Steigt der Fahrer mit seinem Mobilfunkgerät (tragbares elektronisches Gerät) beispielsweise in einen Kraftwagen ein, so kann es wünschenswert sein, eine erste Funktionalität in Form einer drahtlosen Datenübertragung via Bluetooth zu aktivieren, um dadurch eine Freisprecheinrichtung des Kraftwagens mit dem Mobilfunkgerät zu koppeln und nutzen zu können. Ferner ist es wünschenswert, eine zweite Funktionalität in Form einer drahtlosen Datenübertragung über WLAN, welches üblicherweise auch als WiFi bezeichnet wird, sowie eine dritte Funktionalität in Form einer drahtlosen Datenübertragung über GPS zu deaktivieren, um die Batterie über eine Ladevorrichtung des Kraftwagens besonders schnell aufladen zu können.

Koppelt der Nutzer sein Mobilfunkgerät mit der Ladevorrichtung des Kraftwagens, so ermöglicht das Verfahren die Einstellung des jeweils gewünschten Zustands, wobei die drahtlose Datenübertragung über Bluetooth aktiviert und die jeweilige drahtlose Datenübertragung über WLAN und über GPS deaktiviert wird. Beim Aussteigen aus dem Kraftwagen und beim damit einhergehenden Entkoppeln der Ladeeinrichtung von der Ladevorrichtung ist es beispielsweise wünschenswert, die drahtlose Datenübertragung über Bluetooth zu deaktivieren und die jeweilige drahtlose Datenübertragung über WLAN und über GPS zu aktivieren, um einerseits elektrischen Strom zu sparen und andererseits entsprechende Dienste über WLAN und GPS nutzen zu können. Auch diese Einstellung des jeweiligen Zustands ist mittels des Verfahrens automatisch und ohne ein zusätzliches, aktives Zutun des Nutzers möglich. Dadurch kann vermieden werden, dass der Nutzer beim Einsteigen und beim Aussteigen immer wieder die gleichen und in Summe zeitaufwändigen Aktionen durchführen muss. Dadurch ist eine besonders bedarfsgerechte und umgebungsabhängige Einstellung der jeweiligen Zustände realisierbar.

Das elektronischen Gerät umfasst beispielsweise eine Recheneinrichtung zum Ausführen wenigstens eines Computerprogramms, wobei die Recheneinrichtung von der Batterie mit elektrischem Strom versorgbar ist. Die Funktionalität, deren Zustand verändert wird, kann auch das Computerprogramm sein. Mit anderen Worten ist unter der Änderung des Zustands der Funktionalität auch zu verstehen, dass ein mittels der Recheneinrichtung ausführbares Computerprogramm des elektronischen Geräts gestartet oder beendet wird, oder - falls das Computerprogramm bereits gestartet ist und jedoch im Hintergrund ausgeführt wird, so dass eine Benutzeroberfläche des Computerprogramms nicht mittels einer Anzeige des elektronischen Geräts angezeigt wird - in seinem Zustand derart verändert wird, dass die Benutzeroberfläche mittels der Anzeige angezeigt wird.

Bei dem elektronischen Gerät kann es sich um einen sogenannten Laptop, also einen tragbaren PC (Personal Computer), um einen PDA (persönlicher digitaler Assistent), um ein Mobilfunkgerät, insbesondere ein Handy, Smartphone, oder um ein Tablet-PC oder um ein anderweitige, insbesondere tragbares, elektronisches Gerät handeln.

Bei einer besonders vorteilhaften Ausführungsform der Erfindung wird als die Funktionalität eine von einem Übertragungsmodul bereitgestellte drahtlose Datenübertragung in den ausgewählten Zustand eingestellt. Derartige Funktionalitäten bieten einerseits einen hohen Nutzen. Andererseits führen sie zu einem hohen Stromverbrauch. Durch das automatische und bedarfsgerechte Einstellen derartiger Funktionalitäten kann einerseits der Stromverbrauch und somit die Verfügbarkeit der Funktionalitäten erhöht sowie andererseits eine sehr gute Nutzbarkeit des elektronischen Geräts komfortabel realisiert werden.

In besonders vorteilhafter Ausgestaltung der Erfindung werden mittels der Ladevorrichtung über einen Zeitraum Änderungen einer elektrischen, an der Ladeeinrichtung anliegenden Versorgungsspannung zum Aufladen der Batterie bewirkt, wobei der Zustand in Abhängigkeit von den Änderungen der elektrischen Spannung eingestellt wird. Durch die Änderungen der Versorgungsspannung kann auf die Versorgungsspannung ein Signal aufmoduliert werden, wobei in Abhängigkeit dieses Signals der Zustand eingestellt wird. Dadurch ist es beispielsweise möglich, anhand des Signals mehrere, voneinander unabhängige Ladevorrichtungen zu erkennen, da die Ladevorrichtungen beispielsweise jeweilige, voneinander unterschiedliche Änderungen der Versorgungsspannung bewirken und entsprechend voneinander unterschiedliche Signale aussenden. In der Folge ist es möglich, den Zustand in Abhängigkeit von der mit der Ladeeinrichtung gekoppelten Ladevorrichtung einzustellen, um so eine besonders bedarfsgerechte und umgebungsabhängige Einstellung zu realisieren. Das Erfassen des ladegerätespezifischen Signals erfolgt dabei beispielsweise mittels des Computerprogramms.

Bei einer weiteren Ausführungsform der Erfindung wird die Funktionalität des elektronischen Geräts in einen weiten, zuvor von dem Nutzer ausgewählten Zustand eingestellt, wenn die Ladeeinrichtung mit einer vom elektronischen Gerät externen, weiteren Ladevorrichtung zum Aufladen der Batterie gekoppelt wird. Hierdurch ist es beispielsweise möglich, die Funktionalität zu aktivieren, wenn die Ladeeinrichtung mit der ersten Ladevorrichtung gekoppelt wird und die Funktionalität zu deaktivieren oder deaktiviert zu lassen, wenn die Ladeeinrichtung mit der weiteren Ladevorrichtung gekoppelt wird. Der Zustand der Funktionalität kann somit besonders gut an die aktuelle Umgebung und somit an die aktuelle Situation des Nutzers angepasst werden.

Um die Ladevorrichtungen auf besonders einfache Weise voneinander unterscheiden zu können, ist es bei einer weiteren Ausführungsform der Erfindung vorgesehen, dass zur Erfassung der Kopplung der Ladeeinrichtung mit der ersten Ladevorrichtung oder mit der weiteren Ladevorrichtung die von der mit der Ladeeinrichtung gekoppelten Ladevorrichtungen über den Zeitraum bewirkten Änderungen der elektrischen, an der Ladeeinrichtung anliegenden Versorgungsspannung ausgewertet werden. Das jeweilige, von der entsprechenden Ladevorrichtung auszusendende Signal wird somit verwendet, um die jeweilige Ladevorrichtung eindeutig identifizieren und der identifizierten Ladevorrichtung den zugehörigen Zustand der Funktionalität zuordnen zu können.

Dadurch ist es insbesondere möglich, je nach gekoppelter Ladevorrichtung vom Nutzer konfigurierte Profile zu aktivieren oder zu deaktivieren, ohne dass der Nutzer des elektronischen Geräts zeitraubende und umständliche Eingaben am elektronischen Gerät in dieses tätigen muss.

Zur Realisierung einer für den Nutzer besonders einfachen und komfortablen Möglichkeit, den von ihm gewünschten Zustand der Funktionalität auszuwählen, ist es bei einer weiteren Ausführungsform der Erfindung vorgesehen, dass von dem elektronischen Gerät eine Eingabemöglichkeit, insbesondere eine Benutzeroberfläche, bereitgestellt wird, mittels welcher der Zustand durch einer am elektronischen Gerät vom Nutzer zu tätigende Eingabe in das elektronischen Gerät auswählbar ist. Bei einer solchen Eingabemöglichkeit handelt es sich beispielsweise um ein mittels der Recheneinrichtung auszuführendes Rechenprogramm mit einer Benutzeroberfläche, welche mittels einer Anzeige des elektronischen Geräts anzeigbar ist. Mittels eines solche, eine Benutzeroberfläche aufweisenden Rechenprogramms kann der Nutzer besonders einfach Eingaben am elektronischen Gerät in dieses tätigen und so den erwünschterweise einzustellenden Zustand auswählen. Ein solches Computerprogramm wird üblicherweise auch als Application oder als App bezeichnet, welche für unterschiedliche Betriebssysteme wie beispielsweise iOS, Android, Windows etc. programmierbar ist.

Vorzugsweise ist es mittels des Computerprogramms auch möglich, die Profile anzulegen, d.h. zu konfigurieren und auszuwählen. Diese Profile umfassen beispielsweise eine Mehrzahl von jeweiligen, einzustellenden Zuständen von mehreren Funktionalitäten des elektronischen Geräts.
Ferner kann vorgesehen sein, dass das Rechenprogramm bestimmte Änderungen der Versorgungsspannung protokolliert. Des Weiteren kann vorzugsweise vorgesehen sein, dass beispielsweise gespeicherte Spannungsmuster, d.h. zeitliche Verläufe von Änderungen der Versorgungsspannung an der Ladeeinrichtung jeweiligen Profilen zugeordnet werden. können. Wird eine dieser Änderungen der Versorgungsspannung durch die Ladevorrichtung bewirkt, so wird das diesen Änderungen der Versorgungsspannung zugeordnete Profil beispielsweise aktiviert, während die anderen Profile deaktiviert werden. Das Aktivieren und Deaktivieren eines Profils bedeutet, dass die jeweiligen, dem Profil zugeordneten Zustände der zugehörigen Funktionalitäten eingestellt werden.

Die Erfindung basiert somit auf der gemeinsamen Idee, eine umgebungsabhängige Einstellung des Zustands der Funktionalität zu realisieren, ohne dass der Nutzer umständliche und zeitraubende Eingaben am elektronischen Gerät in dieses tätigen muss.

Ein weiterer Aspekt betrifft einen Kraftwagen mit einer erfindungsgemäßen Ladevorrichtung gemäß dem zweiten Aspekt der Erfindung und/oder mit einer Recheneinheit, welche zum Ausführen eines erfindungsgemäßen Verfahrens gemäß dem ersten Aspekt der Erfindung ausgelegt ist. Der erfindungsgemäße Kraftwagen ermöglicht die für den Nutzer einfache, zeitgünstige und komfortable Anpassung des Zustands der Funktionalität an eine Fahrt mit dem Kraftwagen, ohne dass der Nutzer jedes Mal beim Einsteigen in den oder Aussteigen aus dem Kraftwagen Eingaben am elektronischen Gerät vornehmen muss.

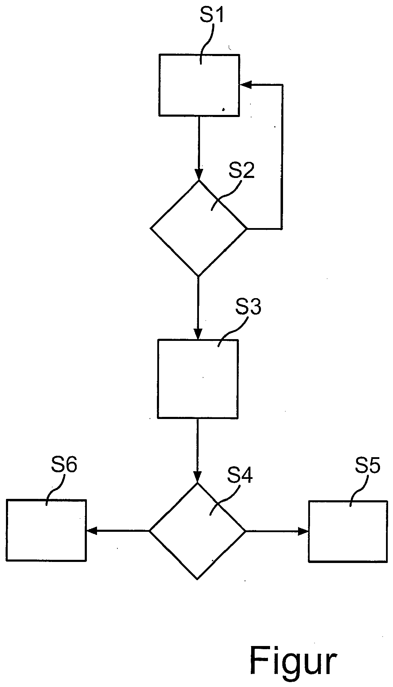

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur ein Ablaufdiagramm zur Veranschaulichung eines Verfahrens zum Betreiben eines Mobilfunkgeräts sowie zum Betreiben einer Ladevorrichtung zum Aufladen einer Batterie des Mobilfunkgeräts mit elektrischem Strom, wobei mittels der Ladevorrichtung ein Identifizierungssignal an das Mobilfunkgerät übermittelt wird und wobei jeweilige Funktionalitäten des Mobilfunkgeräts in Abhängigkeit von dem Identifizierungssignal in einen jeweiligen, zuvor von einem Nutzer des Mobilfunkgeräts ausgewählten Zustand eingestellt werden, wenn das Mobilfunkgerät mit der Ladevorrichtung zum Aufladen der Batterie elektrisch gekoppelt wird.

Die Figur zeigt ein Ablaufdiagramm zur Veranschaulichung eines Verfahrens zum Betreiben eines elektronischen Geräts vorliegend in Form eines Mobilfunkgeräts und zum Betreiben einer Ladevorrichtung für das Mobilfunkgerät.

Bei dem Mobilfunkgerät handelt es sich beispielsweise um ein Smartphone, welches eine Recheneinrichtung zum Ausführen wenigstens eines Computerprogramms sowie eine Batterie zum Versorgen der Recheneinrichtung mit elektrischem Strom umfasst. Das Mobilfunkgerät ist zudem mit wenigstens einem Funknetz über Funktechnik verbindbar und weist eine Anzeige auf, mittels welcher beispielsweise eine Bedienoberfläche des Computerprogramms anzeigbar ist. Über diese Bedienoberfläche kann ein Nutzer des Mobilfunkgeräts am Mobilfunkgerät Eingaben in das Mobilfunkgerät tätigen, um beispielsweise Funktionen des Mobilfunkgeräts zu bewirken.

Infolge des Versorgens der Recheneinrichtung mit elektrischem Strom wird die Batterie entladen. Um die Batterie wieder mit elektrischem Strom aufzuladen, wird eine vom Mobilfunkgerät externe Ladevorrichtung verwendet, welche üblicherweise auch als Ladegerät bezeichnet wird. Um die Batterie mit elektrischem Strom aufzuladen, umfasst das Mobilfunkgerät auch eine Ladeeinrichtung, mit welcher das Ladegerät elektrisch koppelbar ist. Das Ladegerät ist ferner mit einer externen Stromquelle koppelbar, so dass elektrischer Strom von der Stromquelle über die Ladevorrichtung und die Ladeeinrichtung in die Batterie eingespeist werden kann.

Ferner weist das Mobilfunkgerät eine Mehrzahl von Funktionalitäten auf. Bei einer ersten dieser Funktionalitäten handelt es sich um eine von einem Übertragungsmodul bereitgestellte drahtlose Datenübertragung über WLAN, was üblicherweise auch als WiFi bezeichnet wird. Bei einer zweiten der Funktionalitäten handelt es sich vorliegend um eine von dem Übertragungsmodul bereitgestellte drahtlose Datenübertragung über den Datenübertragungsstandard Bluetooth. Die Funktionalitäten können dabei in jeweilige, unterschiedliche Zustände eingestellt werden. Die erste Funktionalität weist dabei einen ersten Zustand auf, in dem die erste Funktionalität aktiviert ist. Ferner weist die erste Funktionalität einen zweiten Zustand auf, in dem die erste Funktionalität deaktiviert ist. Dementsprechend weist die zweite Funktionalität einen ersten Zustand auf, in dem die zweite Funktionalität aktiviert ist. Die zweite Funktionalität weist ferner einen zweiten Zustand auf, in dem die zweite Funktionalität deaktiviert ist. Die Funktionalitäten sind dabei zwischen ihren jeweiligen Zuständen umschaltbar.

Je nach aktueller Umgebung, in der sich der Nutzer des Mobilfunkgeräts befindet, können unterschiedliche Zustände der jeweiligen Funktionalitäten sinnvoll oder erforderlich sein. Befindet sich der Nutzer beispielsweise in einem Kraftwagen, so kann es sinnvoll sein, die erste Funktionalität zu deaktivieren und die zweite Funktionalität zu aktivieren, da der Nutzer beispielsweise eine drahtlose Datenübertragung über WLAN nutzen kann, welche vom Kraftwagen bereitgestellt wird und da sein Mobilfunkgerät mit einer Freisprecheinrichtung des Kraftwagens über die zweite Funktionalität gekoppelt werden soll.

Ist nun jedoch die erste Funktionalität aktiviert und die zweite Funktionalität deaktiviert und steigt der Nutzer in den Kraftwagen ein, so muss er den jeweiligen Zustand der entsprechenden Funktionalität zeitraubend ändern, falls keine entsprechenden Maßnahmen getroffen sind. Anhand der Figur ist nun eine Möglichkeit beschrieben, eine solche zeitaufwändige und unkomfortable Änderung vermeiden zu können.

Im Rahmen des Verfahrens wird in einem ersten Schritt S1 überprüft, ob das Mobilfunkgerät als Stromabnehmer mit dem Ladegerät elektrisch verbunden ist. Wird in einem zweiten Schritt S2 erfasst, dass kein Stromabnehmer mit dem Ladegerät elektrisch gekoppelt ist, so schließt sich an den zweiten Schritt S2 wieder der erste Schritt S1 an. Wird im zweiten Schritt S2 erfasst, dass mit dem Ladegerät das Mobilfunkgerät elektrisch gekoppelt ist, so schließt sich an den zweiten Schritt S2 ein dritter Schritt S3 an.

Im dritten Schritt S3 werden mittels des Ladegeräts, insbesondere mittels einer Steuereinrichtung des Ladegeräts, über einen vorgebbaren Zeitraum Änderungen einer elektrischen, an der Ladeeinrichtung des Mobilfunkgeräts anliegenden und vom Ladegerät bereitgestellten Versorgungsspannung zum Aufladen der Batterie bewirkt. Hierzu wird die Versorgungsspannung beispielsweise über einen kurzen Zeitraum gepulst. Dieses kurze Zeitfenster kann wenige Sekunden oder sogar nur Millisekunden dauern. Dadurch kann innerhalb kurzer Zeit eine Identifizierung des Ladegeräts anhand des Signals erfolgen.

Durch dieses Pulsen wird der elektrischen Versorgungsspannung ein Identifizierungssignal aufmoduliert, mittels welchem die Ladevorrichtung durch das Mobilfunkgerät identifizierbar ist. So ist es beispielsweise durch das Computerprogramm möglich, unterschiedliche, mit der Ladeeinrichtung zu koppelnde Ladegeräte zu identifizieren.

In einem vierten Schritt S4 wird das Erfülltsein mehrerer Bedingungen überprüft. Wird das Computerprogramm zum Identifizieren der Ladevorrichtung beispielsweise im Hintergrund mittels der Recheneinrichtung ausgeführt und wird die Ladevorrichtung von der Recheneinrichtung infolge des ladegerätespezifischen Pulses erkannt und ist dem identifizierten Ladegerät ein sogenanntes Profil zugewiesen, so schließt sich an den vierten Schritt S4 ein fünfter Schritt S5 an. Im fünften Schritt S5 wird die Batterie aufgeladen und das dem identifizierten Ladegerät zugewiesene Profil wird aktiviert. Ist eine der genannten und beim vierten Schritt S4 überprüften Bedingungen nicht erfüllt, so schließt sich an den vierten Schritt S4 ein sechster Schritt S6 an, in welchem die Batterie aufgeladen, jedoch kein Profil aktiviert wird.

Als Profil wird die Gesamtheit der zuvor geschilderten Zustände der Funktionalitäten des Mobilfunkgeräts bezeichnet, wobei dem Profil die zeitlich vor dem Koppeln der Ladeeinrichtung mit der Ladevorrichtung von dem Nutzer des Mobilfunkgeräts jeweils ausgewählten Zustände der jeweiligen Funktionalität zugeordnet sind. Mit anderen Worten kann der Nutzer das Profil konfigurieren und im Rahmen der Konfigurierung des Profils den jeweiligen Zustand der jeweiligen Funktion auswählen. Durch Aktivieren des Profils werden dann die zuvor vom Nutzer jeweils ausgewählten und dem Profil zugeordneten Zustände der Funktionalitäten eingestellt.

Dies bedeutet, dass im fünften Schritt S5 automatisch die zuvor von dem Nutzer ausgewählten, jeweiligen Zustände der Funktionalitäten eingestellt werden, wenn die in Bezug auf den vierten Schritt S4 genannten Bedingungen erfüllt sind. Dies bedeutet vorliegend, dass die erste Funktionalität (WLAN) in ihren zweiten Zustand (deaktiviert) und die zweite Funktionalität (Bluetooth) in ihren ersten Zustand (aktiviert) eingestellt wird, ohne, dass der Nutzer Eingaben am Mobilfunkgerät in dieses vornehmen muss.

Dabei wird das dem Ladegerät zugeordnete Profil immer dann aktiviert, wenn die Ladeeinrichtung mit diesem Ladegerät gekoppelt wird. Die Funktionalitäten weisen somit nach dem Koppeln stets die gleichen, vom Nutzer ausgewählten Zustände auf, wenn die Zustände vom Nutzer nicht entsprechend geändert werden. Durch dieses automatische Einstellen der Zustände werden dem Nutzer die, aufwändigen und zeitraubenden Eingaben zum manuellen Einstellen der Zustände erspart.

Der Nutzer richtet beispielsweise einmalig das Profil ein, d.h. er konfiguriert das Profil, damit jedes Mal beim Einsteigen in den Kraftwagen und beim Koppeln der Ladeeinrichtung mit der Ladevorrichtung die gewünschten Zustände der jeweiligen Funktionalitäten automatisch eingestellt werden. Dadurch kann eine umgebungsabhängige und bedarfsgerechte Aktivierung und Deaktivierung der Funktionalitäten erfolgen.

## Patentansprüche

1. Verfahren zum Betreiben eines eine Batterie und eine Ladeeinrichtung zum Aufladen der Batterie mit elektrischem Strom aufweisenden elektronischen Geräts, bei welchem zumindest eine Funktionalität des elektronischen Geräts in einen zuvor von einem Nutzer des elektronischen Geräts ausgewählten Zustand eingestellt wird (S5), wenn ein Kopplungszustand der Ladeeinrichtung mit einer vom elektronischen Gerät externen Ladevorrichtung zum Aufladen der Batterie verändert wird,
**dadurch gekennzeichnet, dass**
mittels der Ladevorrichtung über einen Zeitraum Änderungen einer elektrischen, an der Ladeeinrichtung anliegenden Versorgungsspannung zum Aufladen der Batterie bewirkt werden (S3), wobei durch die Änderungen der Versorgungsspannung auf die Versorgungsspannung ein Signal aufmoduliert wird, und wobei in Abhängigkeit von dem Signals der Zustand eingestellt wird.

2. Verfahren nach Anspruch 1,
**dadurch gekennzeichnet, dass**
als das elektronische Gerät ein mit wenigstens einem Funknetz über Funktechnik verbindbares und eine Recheneinrichtung zum Ausführen wenigstens eines Computerprogramms aufweisendes Mobilfunkgerät betrieben wird.

3. Verfahren nach einem der Ansprüche 1 oder 2,
**dadurch gekennzeichnet, dass**
als die Funktionalität eine von einem Übertragungsmodul bereitgestellte drahtlose Datenübertragung in den ausgewählten Zustand eingestellt wird.

4. Verfahren nach einem der vorhergehenden Ansprüche,
**dadurch gekennzeichnet, dass**
die Funktionalität des elektronischen Geräts in einen weiteren, zuvor von dem Nutzer ausgewählten Zustand eingestellt wird, wenn die Ladeeinrichtung mit einer vom elektronischen Gerät externen, weiteren Ladevorrichtung zum Aufladen der Batterie gekoppelt wird.

5. Verfahren nach Anspruch 4,
**dadurch gekennzeichnet, dass**
zum Erfassen der Kopplung der Ladeeinrichtung mit der ersten Ladevorrichtung oder mit der weiteren Ladevorrichtung die von der mit der Ladeeinrichtung gekoppelten Ladevorrichtung über den Zeitraum bewirkten Änderungen der elektrischen, an der Ladeeinrichtung anliegenden Versorgungsspannung ausgewertet werden.

6. Verfahren nach einem der vorhergehenden Ansprüche,
**dadurch gekennzeichnet, dass**
von dem elektronischen Gerät eine Eingabemöglichkeit bereitgestellt wird, mittels welcher der Zustand durch eine am elektronischen Gerät vom Nutzer zu tätigende Eingabe in das elektronischen Gerät auswählbar ist.

7. Kraftwagen mit einer Recheneinheit, welche zum Ausführen eines Verfahrens nach einem der Ansprüche 1 bis 6 ausgelegt ist.

## Claims

1. Method for operating an electronic appliance having a battery and a charging device for charging the battery with electric current, wherein at least one functionality of the electronic appliance is set (S5) in a state selected by a user of the electronic appliance beforehand, when a coupling state of the charging device with a charging apparatus for charging the battery is changed, the charging apparatus being external to the electronic appliance,
**characterized in that**
changes of an electric supply voltage applied to the charging device for charging the battery are effected (S3) over a period of time by the charging apparatus, wherein by the changes of the supply voltage a signal is modulated onto the supply voltage, and wherein the state is set depending on the signal.

2. Method according to claim 1,
**characterized in that**,
as the electronic appliance, a mobile radio unit, which is wirelessly connectable to at least one radio network and has a computing device for executing at least one computer program, is operated.

3. Method according to claim 1 or 2,
**characterized in that**,
as the functionality, a wireless data transmission provided by a transmission module is set to the preselected state.

4. Method according to any of the preceding claims,
**characterized in that**
the functionality of the electronic appliance is set to a further state preselected by the user beforehand, when the charging device is coupled with a further charging apparatus for charging the battery, the further charging apparatus being external to the electronic appliance.

5. Method according to claim 4,
**characterized in that**
for detecting the coupling of the charging device with the first charging apparatus or with the further charging apparatus, the changes of the electric supply voltage applied to the charging device, which are effected over a period of time by the charging apparatus coupled with the charging device, are evaluated.

6. Method according to any of the preceding claims,
**characterized in that**
by the electronic appliance an input option is provided, by which the state is selectable by an input to be executed by the user at the electronic appliance.

7. Motor vehicle having a computing device configured for carrying out a method according to any of claims 1 to 6.

## Revendications

1. Procédé pour faire fonctionner un appareil électronique comportant une batterie et un dispositif de chargement pour charger la batterie en courant électrique, selon lequel au moins une fonctionnalité de l'appareil électronique est réglée (S5) dans un état sélectionné au préalable par un utilisateur de l'appareil électronique lorsqu'un état de couplage du dispositif de chargement à un système de chargement externe à l'appareil électronique est modifié pour charger la batterie,
**caractérisé en ce que**, au moyen du système de chargement, des variations d'une tension d'alimentation électrique appliquée au dispositif de chargement sont provoquées (S3) pendant un intervalle de temps pour charger la batterie, un signal étant modulé sur la tension d'alimentation par les variations de la tension d'alimentation et l'état étant réglé en fonction du signal.

2. Procédé selon la revendication 1, **caractérisé en ce que**, comme appareil électronique, on fait fonctionner un appareil de radiocommunication mobile pouvant être relié à au moins un réseau radio par l'intermédiaire d'une technique radio et comportant un dispositif de calcul pour exécuter au moins un programme informatique.

3. Procédé selon l'une des revendications 1 ou 2, **caractérisé en ce que**, comme fonctionnalité, on règle dans l'état sélectionné une transmission de données sans fil fournie par un module de transmission.

4. Procédé selon l'une des revendications précédentes, **caractérisé en ce que** la fonctionnalité de l'appareil électronique est réglée dans un autre état sélectionné au préalable par l'utilisateur lorsque le dispositif de chargement est couplé à un autre système de chargement externe à l'appareil électronique pour charger la batterie.

5. Procédé selon la revendication 4, **caractérisé en ce que**, pour détecter le couplage du dispositif de chargement au premier système de chargement ou à l'autre système de chargement, on évalue les variations, provoquées par le système de chargement couplé au dispositif de chargement pendant l'intervalle de temps, de la tension d'alimentation électrique appliquée au dispositif de chargement.

6. Procédé selon l'une des revendications précédentes, **caractérisé en ce qu'**une possibilité d'entrée est fournie par l'appareil électronique, possibilité d'entrée au moyen de laquelle l'état peut être sélectionné par une entrée, à actionner sur l'appareil électronique par l'utilisateur, dans l'appareil électronique.

7. Véhicule automobile avec une unité de calcul qui est conçue pour mettre en oeuvre un procédé selon l'une des revendications 1 à 6.
